# EUROPEAN PATENT APPLICATION

(11) **EP 3 679 887 A1**
(43) Date of publication of application: **15.07.2020**
(21) Application number: 19158492.9
(22) Date of filing: 21.02.2019
(51) Int. Cl.: A61C 13/00, A61C 8/00

(54) **METHOD AND DEVICE FOR DESIGNING AN ABUTMENT**

(30) Priority: 09.01.2019 EP 19151013
(71) Applicant: EGS S.R.L, 40138 Bologna (IT)
(72) Inventor: BONINO, Marcello, 40139 Bologna (IT); SANTORO, Serena, 40141 Bologna (IT)
(74) Representative: Schultheiss & Sterzel Patentanwälte PartG mbB

(57) **Abstract**

The invention relates to a method for designing an abutment for a dental restoration comprising the steps of
Providing a 3D model of an oral cavity situation having a dental implant, wherein a virtual analog (18) being defined by an occlusal surface of the dental implant is part of the 3D model of the oral cavity situation, wherein the virtual analog (18) comprises a 3D data set of a shape of a surface of the dental implant,
Drawing a first closed curve (20) on the 3D model of the oral cavity situation onto a surface of the virtual analog (18),
Calculating 3D data from an occlusal surface of the virtual analog (18) bordered by the first closed curve (20) on the 3D model, and
Generating a virtual model of the abutment by CAD using the 3D data of the occlusal surface of the virtual analog (18) bordered by the first closed curve (20) to be a basal surface of the virtual model of the abutment.

The invention also relates to a device for performing such a method and an abutment derived from such a method.

## Description

The invention relates to a method for designing an abutment and to a device for performing such a method.

Abutments for dental treatments are well known in the art. Such abutments serve to connect prosthetic dental crowns or bridges to a dental implant, which is implanted in the jaw bone of a patient. Such abutments are for example known from US 2018/0325633 A1 and US 2016/0067015 A1. US 2016/0157967 A1 discloses a method for manufacturing an abutment together with a dental crown and a surgical guide for a dental implant. The method uses a scan of the oral cavity situation to which a plurality of reference markers is attached. The method is mainly used to set the height of the crown correctly. The abutment is merely used to connect the crown to the implant and further details about the manufacturing of the abutment itself are not discussed in this document.

In recent times CAM methods (CAM - Computer-Aided Manufacturing) and CAD methods (CAD - Computer-Aided Design) are start being used for manufacturing dental prosthesis.

The US 2014/0162214 A1 discloses a method for producing a crown for an implant abutment. The abutment is scanned after implantation, because a margin curve of the lower side of the abutment can more easily be recognized at this time compared to after healing of the gingiva, and directly before manufacturing the crown to be able to define a lower part of the crown according to a margin curve of the used abutment. However, the abutment itself is a standard part. Therefore, the design of the lower part of the abutment is done defining one optional and set margin curve on the 3D model of the patient's gingiva. If this margin curve is defined, the lower part of the abutment is shaped following the shape of the gingiva and is created between the edge of the abutment interface (a circle) and the defined margin curve. If this this margin curve is not defined, the lower part of the abutment is created as a thin ring on the edge of the abutment interface (a circle). This shall provide enough room for the healing of the gingiva around the implant.

Resulting from this, the lower part of the abutment has a fixed shape as its basal (lower) part, which is the circle and has a fixed position of its basal part, which is the edge of the abutment interface. This results in an abutment which does not perfectly fit to the implant. Furthermore, the border of the abutment is defined from a predefined border making it impossible to allow the user to slip his knowledge and experience in the shape of the border.

The object of the present invention is to overcome these and other disadvantages of presently known methods for designing abutments and of presently known devices for designing abutments.

The object of the present invention is to allow to produce an individualized abutment and to provide a virtual 3D model for such an abutment. The virtual model of the abutment obtained by the method and the device shall be usable for CAM, and if possible usable directly without additional steps and calculations. The virtual model shall further be suitable for various implants independent from the actual surface and the orientation, alignment and position of the implant in the jaw bone. It is a further object of the present invention to provide a method and a device making use of existing automated CAD-CAM-methods. Therefore, it would be preferable, if the method and the device could be obtained by making use of software and hardware which is already in use for manufacturing dental prosthesis. In addition, it should be possible for an expert in the field, like a dental technician or a dentist to be able to use their experience and knowledge for providing an optimized and individualized abutment for the patient. Furthermore, there should still be enough space for the gingiva to heal, without the abutment preventing such healing.

The problems of the invention are solved by a method according to claim 1 and by a device according to claim 11.

In more detail problems of the invention are solved by a method for designing an abutment for a dental restoration comprising the steps of
1) Providing a 3D model of an oral cavity situation having a dental implant, wherein the dental implant is implanted in a jaw bone, wherein a virtual analog being defined by an occlusal surface of the dental implant is at least a part of the 3D model of the oral cavity situation, wherein the virtual analog comprises a 3D data set of a shape of a surface of the dental implant, which surface of the dental implant being exposed in the gingiva or in the jaw bone into the direction of the oral cavity,
2) Drawing a first closed curve on the 3D model of the oral cavity situation onto a surface of the virtual analog,
3) Calculating 3D data from an occlusal surface of the virtual analog bordered by the first closed curve on the 3D model, and
4) Generating a virtual model of the abutment by CAD using the 3D data of the occlusal surface of the virtual analog bordered by the first closed curve to be a basal surface of the virtual model of the abutment.

The analog is a virtual 3D model of the implant or of at least a part of the implant implanted in a patient's jaw bone. Therefore, the surface of the virtual analog is meant to be a virtual surface.

Of course, the 3D model of an oral cavity situation can include more than one dental implant, therefore additional dental implants to the mentioned dental implant can be present.

The oral cavity is the oral cavity of a patient. The oral cavity situation can include beside the surface of the dental implant any surrounding soft tissue (gingiva) or bone and preferably also the neighboring teeth from the same upper or lower jaw, particular preferably the neighboring teeth from both upper jaw and lower jaw. It can also be provided that the oral cavity situation includes all surfaces of any implant, the dentition and the gingiva of the upper jaw or lower jaw or both upper jaw and lower jaw.

The first closed curve can preferably be a first margin line.

According to a preferred embodiment of the present invention the following step can be provided:
5) Manufacturing a physical abutment by means of CAM from the virtual model of the abutment, after generating the virtual model of the abutment.

Hereby, the technique used to design the model of the abutment is directly used to manufacture the abutment by CAM (Computer Aided Manufacturing).

According to an especially preferred embodiment the following steps may be provided: Drawing a second closed curve on a virtual 3D model of an anatomic shape of a prosthetic tooth crown to be connected to the abutment,
Calculating 3D data from a surface of the virtual 3D model of the anatomic shape of the prosthetic tooth crown bordered by the second closed curve, and
Generating the virtual model of the abutment by CAD using the 3D data of the surface of the virtual 3D model of the anatomic shape of the prosthetic tooth crown bordered by the second closed curve on the 3D model to be at least an upper surface of the virtual model of the abutment or to be an upper surface and at least a part of the side surfaces of the virtual model of the abutment.

The second closed curve can preferably be a second margin line.

By this, not only the lower (basal) side of the virtual model of the abutment is adapted to the implant and thereby optimized, but also the shape of the upper (occlusal) side of the virtual model of the abutment is adapted to the prosthetic tooth crown to be fixed to an abutment produced from this data.

Hereby it can also be provided that the drawing of the second closed curve is freehandedly defined by manually drawing the second closed curve or by setting points of the second closed curve on the 3D model of the surface of the virtual 3D model of the anatomic shape of the prosthetic tooth crown.

Hereby the experience of the dental technician or of the dentist as a user can be used to define a suiting second closed curve fitting best to the patient's oral cavity situation.

According to another especially preferred embodiment the following steps may be provided:
Drawing a third closed curve on a virtual 3D model of an anatomic shape of the patient's gingiva,
Calculating 3D data from a surface of the virtual 3D model of the anatomic shape of the patient's gingiva bordered by the third closed curve, and
Generating the virtual model of the abutment (5) by CAD using the 3D data of the surface of the virtual 3D model of the anatomic shape of the patient's gingiva bordered by the third closed curve on the 3D model to be at least an upper surface of the virtual model of the abutment (5) or to be an upper surface and at least a part of the side surfaces of the virtual model of the abutment (5).

The third closed curve is called the third closed curve to distinguish it from the for mentioned second closed curve. Therefore, the name third closed curve is not supposed to mean that a second closed curve is required. The third closed curve can preferably be a third margin line.

By this, not only the lower (basal) side of the virtual model of the abutment is adapted to the implant and thereby optimized, but also the shape of the upper (occlusal) side of the virtual model of the abutment is adapted to the patient's gingiva.

Hereby it can also be provided that the drawing of the third closed curve is freehandedly defined by manually drawing the third closed curve or by setting points of the third closed curve on the 3D model of the surface of the virtual 3D model of the anatomic shape of the patient's gingiva.

Hereby the experience of the dental technician or of the dentist as a user can be used to define a suiting third closed curve fitting best to the patient's oral cavity situation.

Furthermore, it can be provided that at least a part of an outer side surface of the virtual model of the abutment is calculated as a connecting surface connecting the first closed curve and the second closed curve or connecting the first closed curve and the third closed curve, preferably by using a linear connection of the first closed curve and the second closed curve or the first closed curve and the third closed curve.

By means of this it is possible to easily generate the outer surface of the virtual model of the abutment.

It can also be provided that the second closed curve or the third closed curve is manually and/or automatically corrected and refined, preferably smoothened.

By this, sharp edges, unwanted thin walls and/or undercuts of the virtual model of the abutment can be avoided.

Also, it can be provided that at least a part of an outer side surface of the virtual model of the abutment is calculated as a connection of the first closed curve to an open base of a virtual 3D model of an anatomic shape of a tooth to be connected to the abutment, preferably a linear connection of the first closed curve and the open base.

By means of this it is possible to easily generate the outer surface of the virtual model of the abutment.

For preferred methods according to the invention it can also be provided that the first closed curve is manually and/or automatically corrected and refined, preferably smoothened.

By this sharp edges, unwanted thin walls and/or undercuts of the virtual model of the abutment can be avoided.

According to another preferred embodiment of the present invention it can be provided that the drawing of the first closed curve is freehandedly defined by manually drawing the first closed curve or by setting points of the first closed curve on the 3D model of the virtual analog.

Hereby the experience of the dental technician or of the dentist as a user can be used to define a suiting first closed curve fitting best to the patient's oral cavity situation.

Furthermore, it can be provided that the remaining other surfaces of the virtual model of the abutment are taken from a database and/or are calculated depending from 3D model of the oral cavity situation, preferably are calculated depending from a virtual model of the surrounding gingiva and the neighboring teeth.

Hereby the method is capable of providing a complete virtual model of the abutment. The resulting data can thus directly be used as CAD-data to provide them to a CAM-process for physically manufacturing the abutment.

The problems underlying the present invention are also solved by a device for performing such a method, the device comprising a memory device for storing the 3D model of the oral cavity situation, a graphic display for displaying the 3D model of the oral cavity situation and the first closed curve, a first calculating unit for calculating the 3D data from the occlusal surface of the virtual analog bordered by the first closed curve on the 3D model, the first calculating unit having access to the memory device, and a second calculating unit for generating the virtual model of the abutment by CAD.

The first calculating unit and the second calculating unit may be realized by a single processor or computer which is programmed to perform both calculations.

Hereby it can be provided that the device further comprising a third calculating unit for calculating the 3D data from a surface of the virtual 3D model of the anatomic shape of a prosthetic tooth crown bordered by the second closed curve on the 3D model and/or for calculating the 3D data from a surface of the virtual 3D model of the anatomic shape of the patient's gingiva bordered by the third closed curve on the 3D model, wherein a virtual 3D model of an anatomic shape of the prosthetic tooth crown to be connected to the abutment is additionally storable in the memory device and/or a virtual 3D model of an anatomic shape of the patient's gingiva is additionally storable in the memory device and the graphic display is configured to display the second closed curve and/or the third closed curve.

By this, not only the lower (basal) side of the virtual model of the abutment is adapted to the implant and thereby optimized, but also the shape of the upper (occlusal) side of the virtual model of the abutment is adapted to the prosthetic tooth crown to be fixed to an abutment produced from this data.

Furthermore, it can be provided that an input device allowing to manually draw the first closed curve on the 3D model of the oral cavity situation onto a surface of the virtual analog, and if applicable the second closed curve on a virtual 3D model of an anatomic shape of a prosthetic tooth crown to be connected to the abutment and/or if applicable the third closed curve on a virtual 3D model of an anatomic shape of the patient's gingiva.

Hereby the user can draw the first closed curve and if applicable the second closed curve and/or the third closed curve graphically onto the corresponding 3D models.

In addition, it can be provided that the device further comprising a CAM-device for producing the physical abutment according to the virtual model of the abutment.

Hereby, the technique used to design the model of the abutment is directly used to manufacture the abutment by CAM.

The problems according to the present invention are also solved by a physical abutment obtained by a method according to the invention.

The invention is based on the surprising finding that it is possible to draw a first closed curve on a virtual analog and thereby defining the borderlines of a basal (lower) surface of a virtual abutment, so that a physical abutment produced from this virtual model of the abutment then form-fits to an occlusal virtual surface of the implant in the jaw bone. If the first closed curve can be drawn on the occlusal surface of the virtual analog in different distances from the edge of the analog, it is possible for the user (here the dental technician or the dentist) to give his expertise as an input, how much space is needed for the healing gingiva and what part of the surface of the implant may be used for a snug-fit connection of the implant to the physical abutment to be produced from the virtual model of the abutment. Therefore, the invention provides a virtual model of an abutment or an individually produced abutment which can be stably connected to an existing implant, independent from its position, alignment, orientation and condition of its occlusal surface.

The invention addresses the object of the invention by allowing the user to define the shape of the lower part of the abutment in a way that allows the whole abutment to adapt to the patient's individual bone and gingiva shape, which can also be very different between vestibular and lingual sides, and by leaving room for patient's gingiva natural healing process.

The present invention allows a user to define a first closed curve on the virtual 3D model of the analog and optionally a second closed curve on the virtual 3D model of the anatomic shape of the tooth or a third closed curve on the virtual model of the patient's gingiva, instead of merely implementing functionalities allowing the user to define and edit a closed curve on the 3D model of the patient's gingiva only.

The thereby implemented functionalities which define the surface of the lower part of the analog by the first closed curve can be adapted to design the virtual abutment between the first closed curve and the second closed curve or between the first closed curve on the 3D model of the virtual analog and the open base of the 3D model of the anatomic shape of the tooth.

The present invention allows the user to define the shape of the lower part of the abutment in a way that allows the whole abutment to adapt to the patient's individual bone and gingiva shape, which can also be very different between the vestibular side and the lingual side as well as leaving enough room for patient's gingiva natural healing process.

Further embodiments of the invention will now be explained with reference to seven schematic figures below, however without limiting the invention. Wherein:
- Fig. 1: shows a schematic side view on a virtual model of an oral cavity situation including first and second closed curves to define sides of an abutment;
- Fig. 2: shows a schematic side view on a virtual model of an oral cavity situation including a first closed curve to define a basal side of an abutment;
- Fig. 3: shows a device according to the invention and for performing a method according to the invention;
- Fig. 4: shows an exemplary sequence diagram for a method according to the invention;
- Fig. 5: shows a schematic side view on a virtual model of an oral cavity situation including a first closed curve and a virtual basal surface of a prosthetic crown to define two sides of an abutment;
- Fig. 6: shows a schematic side view on a virtual model of an oral cavity situation including a first closed curve and a second closed curve on the virtual model of the prosthetic crown to define two sides of an abutment; and
- Fig. 7: shows a schematic side view on a virtual model of an oral cavity situation including a first closed curve and a third closed curve on the virtual model of the patient's gingiva to define two sides of an abutment.

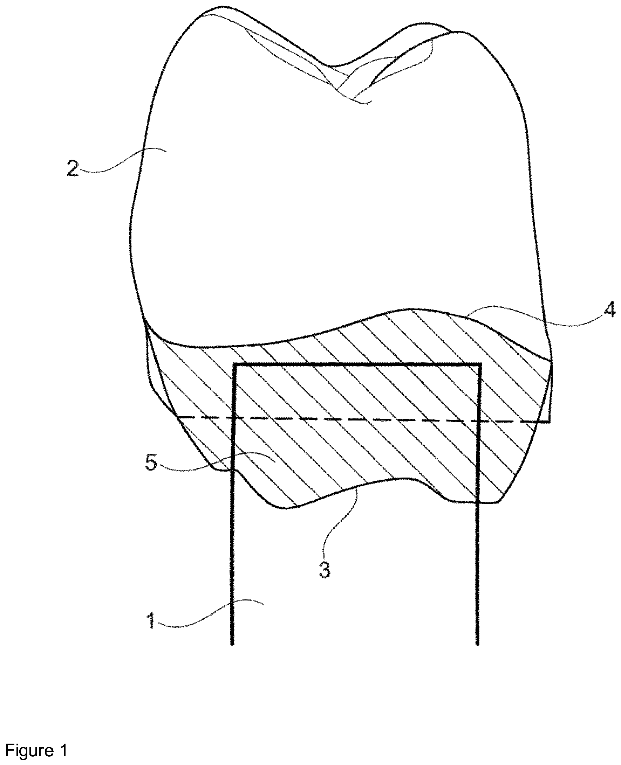

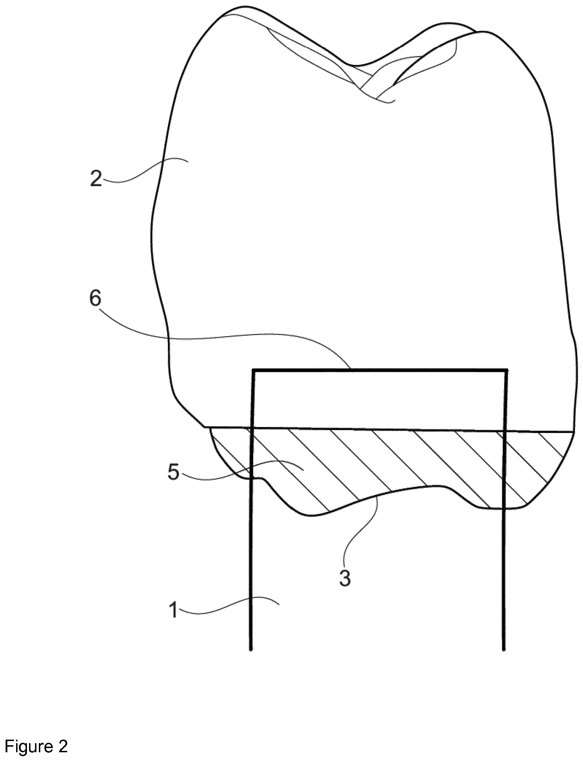

Figures 1 and 2 show two embodiments of the present invention. The figures 1 and 2 are showing a virtual analog 1, which can be a three-dimensional (3D) CAD-file. In addition, a virtual 3D model of a prosthetic tooth crown 2 is shown. The virtual analog 1 can be placed partly inside the prosthetic tooth crown 2. A first closed curve 3 as a margin line can be drawn manually by a user, i.e. a dentist or a dental technician, on the virtual analog 1. A second closed curve 4 as a margin line (only shown in figure 1) can optionally be drawn on the 3D model of the prosthetic tooth crown 2.

A virtual 3D model of a basal side of an abutment 5 can be calculated from the first closed curve 3 and the second closed curve 4 (see figure 1) or from the first closed curve 3 and an existing basal surface 6 of the 3D model of the prosthetic tooth crown 2 (see figure 2). The first closed curve 3 may border an area on the surface of the virtual analog 1. A first 3D CAD-data-file of this area can be calculated from the virtual analog 1 and the first closed curve 3. Such a first 3D CAD-data-file can be used to generate the basal (lower) surface of the abutment 5.

The second closed curve 5 may border an area on the virtual 3D model of a prosthetic tooth crown 2 or on a basal surface inside a recession on the basal side of the virtual 3D model of the prosthetic tooth crown 2. A second 3D CAD-data-file of this area can be calculated from the virtual 3D model of the prosthetic tooth crown 2 and the second closed curve 5. Such a second 3D CAD-data-file can be used to generate the occlusal (upper) surface of the abutment 5 (see figure 1). Alternatively, the occlusal (upper) surface of the abutment 5 may be derived from an existing pre-set surface of the virtual 3D model of a prosthetic tooth crown 2 (see figure 2).

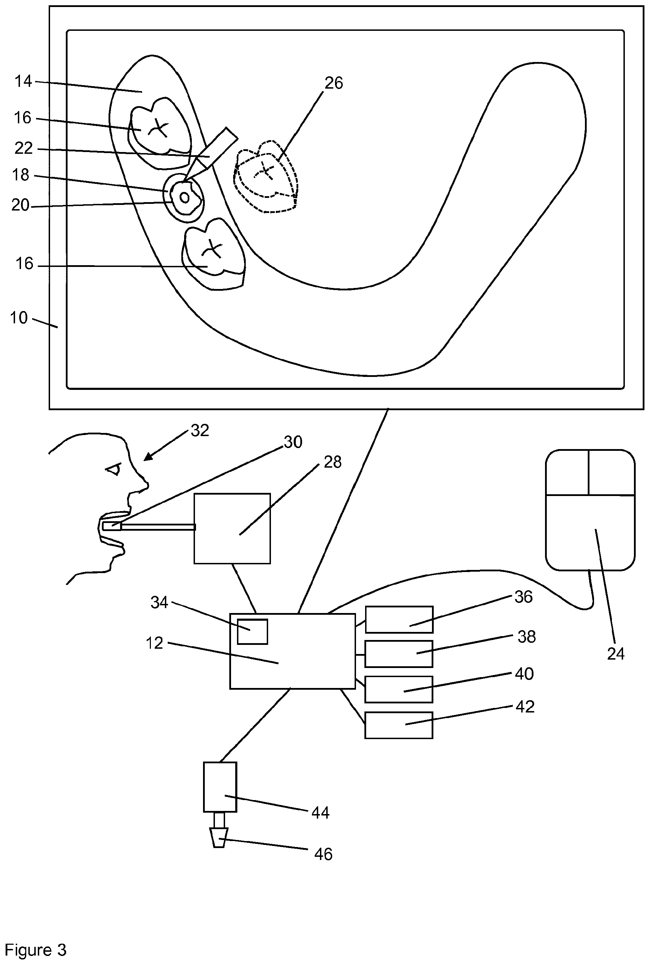

Figure 3 shows a device according to the invention and for performing a method according to the invention.

The device may comprise a display 10 connected to a computer 12. The display 10 can be able to display 3D virtual models of an oral cavity situation of a patient 32 and all other virtual models needed or helpful to perform the method according to the invention. The oral cavity situation may comprise a 3D virtual model of a part of the gingiva 14 of the patient 32. The virtual model of the gingiva 14 may form an arch. On the 3D virtual model of a part of the gingiva 14 two 3D virtual models of existing teeth 16 may be located. A 3D virtual model of an implant as a virtual analog 18 may be located on the 3D virtual model of the gingiva 14. The 3D virtual model of the implant as a virtual analog 18 may be located between the 3D virtual models of the existing teeth 16. A first closed curve 20 as a margin line may be drawn by a user on the surface of the virtual analog 18. The analog 18 is containing a position or shape of a central threaded bore.

A virtual pencil 22 can be displayed on the display 10, which may help the user to draw the first closed curve 20 precisely. The virtual pencil 22 may be moved on the display 10 by moving a computer mouse 24 or by using another input device. For example, a touch screen could be used as the display 10. A 3D virtual model of a prosthetic tooth crown 26 may be displayed on the display 10 and may be movable onto the virtual analog 18. The virtual model of the prosthetic tooth crown 26 can be transparent or can be made transparent so the user may view the analog 18 through the virtual model of the prosthetic tooth crown 26. The virtual model of the prosthetic tooth crown 26 is shown in figure 3 by dashed lines. A second closed curve (not shown) as a margin line may optionally be drawn on the virtual model of the prosthetic tooth crown 26.

The virtual model of the oral cavity situation can be taken by use of an intraoral scanner 28, which may have a stereo camera on a scanner head 30, which is insertable into an oral cavity of the patient 32. The intraoral scanner 28 is connected to the computer 12. The scan of the oral cavity situation of the patient 32 can be saved in an electronic memory 34 of the computer 12. The memory 34 can be of the RAM (Random Access Memory) type. The oral cavity situation can be read from the memory 34 and be displayed on the display 10 by the computer 12. Instead of directly scanning the oral cavity situation at the patient 32, it is possible to scan a gypsum model taken from an intraoral impression of the patient, the gypsum model including a physical analog. Furthermore, it is also possible to directly scan an intraoral impression taken from the patient 32, which is then of course a negative form of the oral cavity situation.

A first calculating unit 36 of the computer 12 may be used to calculate 3D data from the occlusal surface of the virtual analog 18 bordered by the first closed curve 20. The first calculating 36 unit may have access to the memory device 34 for this purpose. A second calculating unit 38 of the computer 12 may be used for generating a virtual model of the abutment by CAD.

The computer 12 may further comprise a third calculating unit 40 for calculating 3D data from a surface of the virtual model of the anatomic shape of the prosthetic tooth crown 26 bordered by a second closed curve (not shown) as a margin line. The surface of the virtual model of the anatomic shape of the prosthetic tooth crown 26 may be open to a basal side. The virtual model of the anatomic shape of the prosthetic tooth crown 26 to be connected to the abutment is additionally storable in the memory 34.

The first calculating unit 36 and the second calculating unit 38 and the optional third calculating unit 40 may be realized by a single computer 12 which is programmed to perform all necessary calculations. Therefore, the first calculating unit 36 and the second calculating unit 38 and the optional third calculating unit 40 may be modules of said program.

Some or all of the above described 3D data and virtual models may be available as CAD-files. It is especially preferred if the virtual model of the abutment is directly provided as a CAD-file. This allows to directly use the CAD-file for the CAM-device.

A fourth calculating unit 42 may be used for calculating corrections of the first closed curve 20 and optionally also of the second closed curve (not shown). For example, the first closed curve 20 may be smoothened. In addition, the user may perform corrections and refinements to the first closed curve 20 and optionally the second closed curve.

The computer 12 may also be connected to a CAM-device 44 which may be able to control a milling head 46 for milling the abutment according to the virtual model of the abutment from a solid body. Alternatively, other CAM methods, like Rapid Prototyping methods, can be used for the manufacturing of the abutment.

The invention consists in the functionality of a CAD-software used to design abutments, which is able to design at least the lower part of an abutment defining one or two closed curves as margin lines in the following way:
The first closed curve 3, 23 is drawn on the virtual 3D model of the analog 1, 18 (which simulates the implant fixed in the patient's gingiva and jaw bone);
The optional second closed curve 4 is drawn on the virtual 3D model of the anatomic shape of the prosthetic tooth crown 2, 26; and
The user is able to freely define both closed curves and edit them for the needed local corrections and refinements.

If both closed curves are defined (see FIG. 1), the external surface of the lower part of the abutment 5 is created by the software as a surface connecting them. If only the first closed curve 3 on the analog 1 is defined (see FIG. 2), the external surface of the lower part of the abutment 5 is created by the software as a surface connecting it and the open base of the 3D model of the anatomic shape of the prosthetic tooth crown 2.

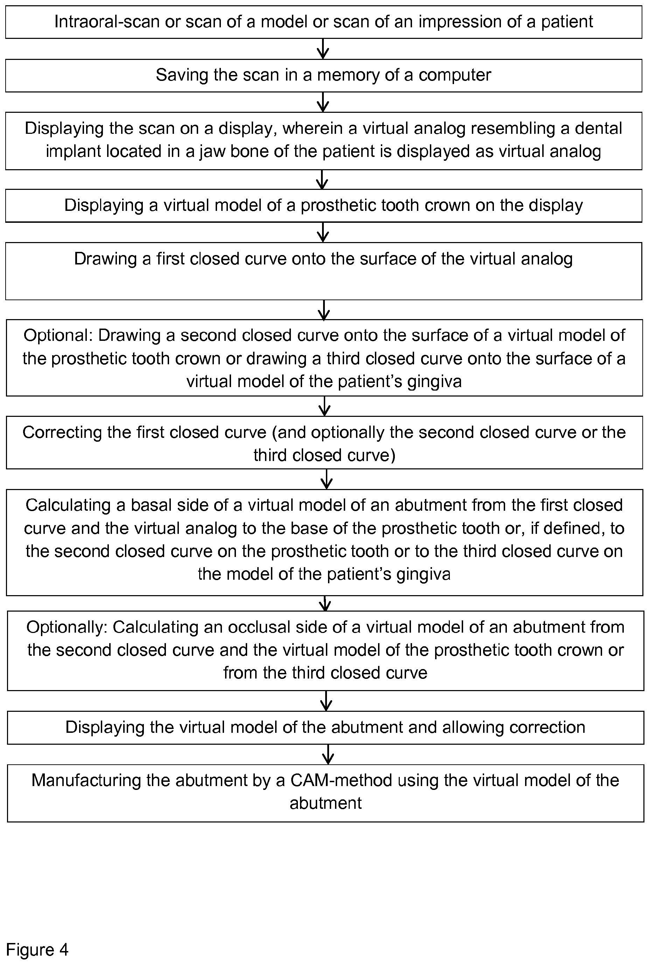

Figure 4 shows an exemplary sequence diagram for a method according to the invention.

First, an intraoral-scan of a patient may be performed to obtain a 3D virtual model of the oral cavity situation. Alternatively, a scan of a physical gypsum model of the oral cavity situation or a scan of an impression taken from the oral cavity of the patient can be used. The patient is having a dental implant implanted to his jaw bone. The implant can be part of the scanned area or a physical analog resembling the implant in the gypsum model of the oral cavity situation can be part of the scanned area.

Following this, the scan may be saved to a memory (like a RAM) of a computer, whereas the computer may be programmed and used for the method according to the invention.

Next, the scan can be displayed on a display, wherein a virtual analog resembling a dental implant located in a jaw bone of the patient may be displayed as a virtual analog.

A virtual model of a prosthetic tooth crown may be displayed on the display optionally at its destined position and orientation. Preferably, the virtual model of a prosthetic tooth crown may be shown transparent to allow viewing the virtual analog therethrough.

A first closed curve may be drawn as a margin line onto the virtual analog manually. Optionally, a second closed curve may be drawn as a margin line onto the virtual model of the prosthetic tooth crown or a third closed curve may be drawn as a margin line onto a virtual model of the patient's gingiva.

The first closed curve and if applicable the second closed curve or the third closed curve may be corrected automatically by the computer and/or manually by the user.

A basal side of a virtual model of an abutment can be calculated from the first closed curve and the virtual analog. Likewise, an occlusal side of a virtual model of the abutment can optionally be calculated from the second closed curve and the virtual model of the prosthetic tooth crown or calculated from the third closed curve and the virtual model of the patient's gingiva.

The other sides of the virtual model of the abutment may be calculated by the computer by connecting the first closed curve to a pre-defined surface of the prosthetic tooth crown or by connecting the first closed curve to the second closed curve or third closed curve.

The virtual model of the abutment may now be displayed. The user may be allowed for final corrections of the virtual model of the abutment.

As a last step a physical abutment may be produced based on the virtual model of the abutment using a CAM-method. For example, a milling machine may be used as CAM-device, being able to mill the physical abutment from a solid block. Alternatively, other CAM methods, like Rapid Prototyping methods, can be used for the manufacturing of the abutment.

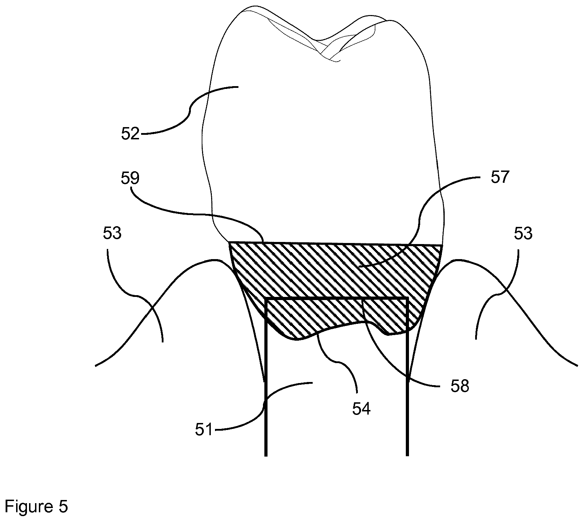

Figures 5, 6 and 7 show three different embodiments of the present invention. The figures 5 to 7 are showing a virtual analog 51, which can be a three-dimensional (3D) CAD-file. In addition, a virtual 3D model of a prosthetic tooth crown 52 is shown. The virtual analog 51 can be placed partly inside the prosthetic tooth crown 52. Furthermore, a virtual 3D model of the patient's gingiva 53 is shown. A first closed curve 54 as a margin line can be drawn manually by a user, i.e. a dentist or a dental technician, on the virtual analog 51. A virtual 3D model of a basal side of a virtual abutment 57 can be calculated from the first closed curve 54. This can be the case for all three embodiments according to figures 5 to 7.

Referring now to figure 5, an existing and given basal surface 59 of the virtual 3D model of the prosthetic tooth crown 52 can be used to define and calculate an occlusal surface of the virtual 3D model on the virtual abutment 57.

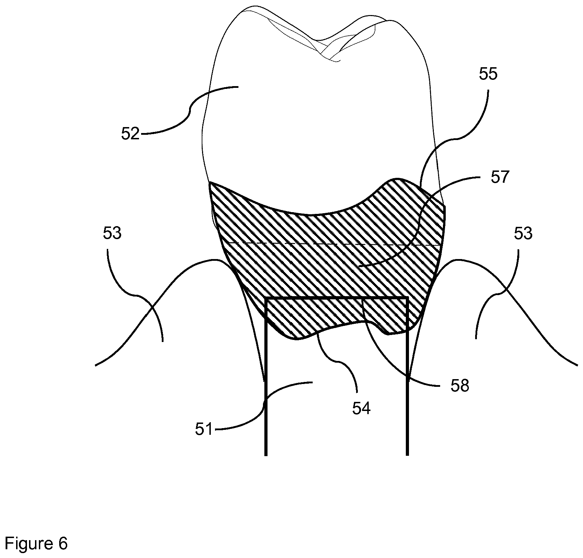

Alternative to using the given basal surface 59 of the virtual 3D model of the prosthetic tooth crown 52, a second closed curve 55 as a margin line (only shown in figure 6) can optionally be drawn on the 3D model of the prosthetic tooth crown 52. The second closed curve 55 can be used to calculate an occlusal surface of the virtual abutment 57.

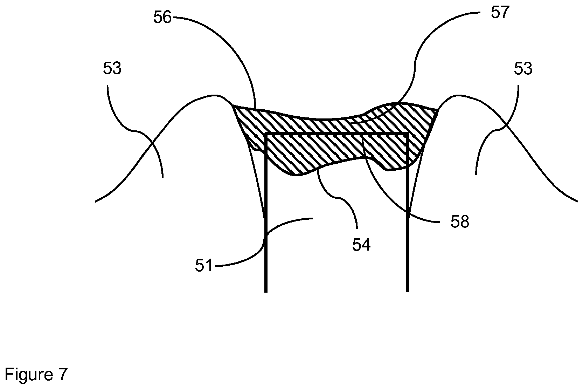

Further alternative to using the given basal surface 59 of the virtual 3D model of the prosthetic tooth crown 52, a third closed curve 56 as a margin line (only shown in figure 7) can optionally be drawn on the 3D model of the virtual gingiva 53. The third closed curve 56 can be used to calculate an occlusal surface of the virtual abutment 57.

Therefore, for all three embodiments according to figures 5 to 7, the virtual 3D model of a basal side of an abutment 57 can be calculated from the first closed curve 54 and the second closed curve 55 (see figure 6) or from the first closed curve 54 and an existing basal surface 59 of the 3D model of the prosthetic tooth crown 52 (see figure 5) or from the first closed curve 54 and the third closed curve 56 (see figure 7).

The first closed curve 54 may border an area on the surface of the virtual analog 51. A first 3D CAD-data-file of this area can be calculated from the virtual analog 51 and the first closed curve 54. Such a first 3D CAD-data-file can be used to generate the basal (lower) surface of the abutment 57.

The second closed curve 55 may border an area on the virtual 3D model of a prosthetic tooth crown 52 or on a basal surface inside a recession on the basal side of the virtual 3D model of the prosthetic tooth crown 52. A second 3D CAD-data-file of this area can be calculated from the virtual 3D model of the prosthetic tooth crown 52 and the second closed curve 55. Such a second 3D CAD-data-file can be used to generate the occlusal (upper) surface of the abutment 57 (see figure 6).

The third closed curve 56 may border an area on the virtual 3D model of the patient's gingiva 53. A third 3D CAD-data-file of this area can be calculated by connecting the closed margin line of the virtual 3D model of the the patient's gingiva 53 within the third closed curve 56. Such a third 3D CAD-data-file can be used to generate the occlusal (upper) surface of the abutment 57 (see figure 7). Alternatively, the occlusal (upper) surface of the abutment 57 may be derived from an existing pre-set surface 59 of the virtual 3D model of a prosthetic tooth crown 52 (see figure 5).

The features of the invention disclosed in the above description, the claims, figures, and exemplary embodiments can be essential both individually and in any combination for implementing the various embodiments of the invention.

### List of reference symbols

- 1: Virtual analog
- 2: Virtual prosthetic tooth crown
- 3: First closed curve
- 4: Second closed curve
- 5: Virtual abutment
- 6: Basal surface
- 10: Display
- 12: Computer
- 14: Virtual gingiva
- 16: Virtual prosthetic tooth crown
- 18: Virtual analog
- 20: First closed curve
- 22: Virtual pencil
- 24: Computer mouse
- 26: Virtual crown
- 28: Intraoral scanner
- 30: Scanner head
- 32: Patient
- 34: Memory
- 36: First calculating unit
- 38: Second calculating unit
- 40: Third calculating unit
- 42: Fourth calculating unit
- 44: CAM-device
- 46: Milling head
- 51: Virtual analog
- 52: Virtual prosthetic tooth crown
- 53: Virtual gingiva
- 54: First closed curve
- 55: Second closed curve
- 56: Third closed curve
- 57: Virtual abutment
- 58: Virtual basal surface of abutment
- 59: Virtual basal surface of prosthetic tooth crown

## Claims

1. Method for designing an abutment for a dental restoration comprising the steps of
Providing a 3D model of an oral cavity situation having a dental implant, wherein the dental implant is implanted in a jaw bone, wherein a virtual analog (1, 18, 51) being defined by an occlusal surface of the dental implant is at least a part of the 3D model of the oral cavity situation, wherein the virtual analog (1, 18, 51) comprises a 3D data set of a shape of a surface of the dental implant, which surface of the dental implant being exposed in the gingiva or in the jaw bone into the direction of the oral cavity,
Drawing a first closed curve (3, 20, 54) on the 3D model of the oral cavity situation onto a surface of the virtual analog (1, 18, 51),
Calculating 3D data from an occlusal surface of the virtual analog (1, 18, 51) bordered by the first closed curve (3, 20, 54) on the 3D model, and Generating a virtual model of the abutment (5, 57) by CAD using the 3D data of the occlusal surface of the virtual analog (1, 18, 51) bordered by the first closed curve (3, 20, 54) to be a basal surface of the virtual model of the abutment (5, 57).

2. Method according to claim 1, **characterized by**
Manufacturing a physical abutment by means of CAM from the virtual model of the abutment (5, 57), after generating the virtual model of the abutment (5, 57).

3. Method according to any one of the claims 1 or 2, **characterized by**
Drawing a second closed curve (4, 55) on a virtual 3D model of an anatomic shape of a prosthetic tooth crown (2, 16, 52) to be connected to the abutment, Calculating 3D data from a surface of the virtual 3D model of the anatomic shape of the prosthetic tooth crown (2, 16, 52) bordered by the second closed curve (4, 55), and
Generating the virtual model of the abutment (5, 57) by CAD using the 3D data of the surface of the virtual 3D model of the anatomic shape of the prosthetic tooth crown (2, 16, 52) bordered by the second closed curve (4, 55) on the 3D model to be at least an upper surface of the virtual model of the abutment (5, 57) or to be an upper surface and at least a part of the side surfaces of the virtual model of the abutment (5, 57).

4. Method according to claim 3, **characterized in that**
the drawing of the second closed curve (4, 55) is freehandedly defined by manually drawing the second closed curve (4, 55) or by setting points of the second closed curve (4, 55) on the 3D model of the surface of the virtual 3D model of the anatomic shape of the prosthetic tooth crown (2, 16, 52).

5. Method according to any one of the claims 1 or 2, **characterized by**
Drawing a third closed curve (56) on a virtual 3D model of an anatomic shape of the patient's gingiva (53),
Calculating 3D data from a surface of the virtual 3D model of the anatomic shape of the patient's gingiva (53) bordered by the third closed curve (56), and Generating the virtual model of the abutment (5, 57) by CAD using the 3D data of the surface of the virtual 3D model of the anatomic shape of the patient's gingiva (53) bordered by the third closed curve (56) on the 3D model to be at least an upper surface of the virtual model of the abutment (5, 57) or to be an upper surface and at least a part of the side surfaces of the virtual model of the abutment (5, 57).

6. Method according to claim 5, **characterized in that**
the drawing of the third closed curve (56) is freehandedly defined by manually drawing the third closed curve (56) or by setting points of the third closed curve (56) on the 3D model of the surface of the virtual 3D model of the anatomic shape of the patient's gingiva (53).

7. Method according to any one of claims 3 to 6, **characterized in that**
at least a part of an outer side surface of the virtual model of the abutment (5, 57) is calculated as a connecting surface connecting the first closed curve (3, 20, 54) and the second closed curve (4, 55) or connecting the first closed curve (3, 20, 54) and the third closed curve (56), preferably by using a linear connection of the first closed curve (3, 20, 54) and the second closed curve (4, 55) or the first closed curve (3, 20, 54) and the third closed curve (56).

8. Method according to any one of the preceding claims 3 to 7, **characterized in that**
the second closed curve (4, 55) or the third closed curve (56) is manually and/or automatically corrected and refined, preferably smoothened.

9. Method according to any one of preceding claims, **characterized in that**
at least a part of an outer side surface of the virtual model of the abutment (5, 57) is calculated as a connection of the first closed curve (3, 20, 54) to an open base (6) of a virtual 3D model of an anatomic shape of a tooth to be connected to the abutment, preferably a linear connection of the first closed curve (3, 20, 54) and the open base (6).

10. Method according to any one of the preceding claims, **characterized in that**
the first closed curve (3, 20, 54) is manually and/or automatically corrected and refined, preferably smoothened.

11. Method according to any one of the preceding claims, **characterized in that** the drawing of the first closed curve (3, 20, 54) is freehandedly defined by manually drawing the first closed curve (3, 20, 54) or by setting points of the first closed curve (3, 20, 54) on the 3D model of the virtual analog (1, 18, 51).

12. Method according to any one of the preceding claims, **characterized in that**
the remaining other surfaces of the virtual model of the abutment (5, 57) are taken from a database and/or are calculated depending from 3D model of the oral cavity situation, preferably are calculated depending from a virtual model of the surrounding gingiva (14) and the neighboring teeth (16).

13. Device for performing a method according to any of the preceding claims, the device comprising
a memory device (34) for storing the 3D model of the oral cavity situation,
a graphic display (10) for displaying the 3D model of the oral cavity situation and the first closed curve (3, 20, 54),
a first calculating unit (36) for calculating the 3D data from the occlusal surface of the virtual analog (1, 18, 51) bordered by the first closed curve (3, 20, 54) on the 3D model, the first calculating unit (36) having access to the memory device (34), and
a second calculating unit (38) for generating the virtual model of the abutment (5, 57) by CAD.

14. Device according to claim 13, **characterized in that**
the device further comprising a third calculating unit (40) for calculating the 3D data from a surface of the virtual 3D model of the anatomic shape of a prosthetic tooth crown (2, 16, 52) bordered by the second closed curve (4, 55) on the 3D model and/or for calculating the 3D data from a surface of the virtual 3D model of the anatomic shape of the patient's gingiva (53) bordered by the third closed curve (56) on the 3D model, wherein a virtual 3D model of an anatomic shape of the prosthetic tooth crown (2, 16, 52) to be connected to the abutment is additionally storable in the memory device (34) and/or a virtual 3D model of an anatomic shape of the patient's gingiva (53) is additionally storable in the memory device (34), and the graphic display (10) is configured to display the second closed curve (4, 55) and/or the third closed curve (56).

15. Device according to claim 13 or 14, **characterized by**
an input device (24) allowing to manually draw the first closed curve (3, 20, 54) on the 3D model of the oral cavity situation onto the surface of the virtual analog (1, 18, 51), and if applicable the second closed curve (4, 55) on a virtual 3D model of an anatomic shape of a prosthetic tooth crown (2, 16, 52) to be connected to the abutment and/or if applicable the third closed curve (56) on a virtual 3D model of an anatomic shape of the patient's gingiva (53).

16. Device according to any one of claims 13 to 15, **characterized in that**
the device further comprising a CAM-device (44) for producing the physical abutment according to the virtual model of the abutment (5, 57).

17. Physical abutment obtained by a method according to any one of claims 1 to 12.
